# EUROPEAN PATENT APPLICATION

(11) **EP 1 939 763 A1**
(43) Date of publication of application: **02.07.2008**
(21) Application number: 07005829.2
(22) Date of filing: 21.03.2007
(51) Int. Cl.: G06F 17/30, H04L 29/08

(54) **Method for providing content from a mobile device, gateway for providing content and mobile device**

(30) Priority: 29.12.2006 EP 06027109
(71) Applicant: Vodafone Holding GmbH, 40213 Düsseldorf (DE)
(72) Inventor: van Muijen, Robert, 3665 As (BE); Martin, Maurice, 3620 Ianaken (BE)
(74) Representative: Cullinane, Marietta Bettina

(57) **Abstract**

The present invention relates to a method for providing content from a mobile device (2) within a communication network comprising at least one remote gateway (3) with a display gateway (6) for a thin client application, at least one management unit (5) comprised by the remote gateway (3) and at least one mobile device (2), wherein upon identification of a request from a mobile device (2) transmitted within a thin client application, the display gateway (6) triggers the management unit (5) to initiate an upload process of content from the mobile device (2). Furthermore a remote gateway (3) and a mobile device (3) are described.

## Description

The present invention relates to a method for providing content from a mobile device, preferably to a remote server. Furthermore the invention relates to a gateway for providing content from the mobile device. Finally, the invention relates to a mobile device.

Mobile devices such as mobile phones are increasingly being put to use for purposes other then mere telephone conversations. In KR 10 2006 004 51 77 A for example, the usage of a mobile phone for transmitting moving images to a user blog is described. In this method, the user can select the images to be uploaded and transmit the images by inputting a special number allocated to a blog provider from a communication provider. The image file is then processed and stored or converted into a format playable in the Internet.

One disadvantage of this method is that the user will have to indicate the desired location of the file by manually inputting the number and initiating a call.

Also browser applications are known in the prior art, wherein a user of a terminal, e.g. a PC, can browse the Internet and can upload information to a desired website while visiting, i.e. viewing the website. As the processing and memory capacity of a mobile terminal, in particular a mobile phone, is small in comparison to the capabilities of devices, such as a PC, applications such as browsers can only be executed with limited features on a mobile device. For example, micro browsers have been suggested. Alternatively, browsing may be performed from a mobile device based on a thin client application. In this case, the actual browser application is executed on a remote gateway, in particular a display gateway, and a thin client on the mobile terminal is provided for receiving display data from the gateway.

The usage of a thin client application is advantageous in that the requirements to memory and processing capabilities of the mobile terminal can be reduced. One drawback of this solution, however, lies in the fact that the browser application is executed on the remote gateway and the mobile terminal thus has no direct communication channel with a remote server, where web-sites may be hosted. To date, it is thus not possible to provide content from the mobile device to a web page currently displayed within the thin client application.

The problem underlying the present invention is thus to provide a solution which allows for increased convenience for the user of a mobile terminal with a limited requirement of processing and storage capabilities.

The present invention is based on the finding that this problem can be solved by providing an upload-extension to a thin client architecture.

According to a first aspect, the invention relates to a method for providing content from a mobile device within a communication network comprising at least one remote gateway with a display gateway for a thin client application, at least one management unit comprised by the remote gateway and at least one mobile device. The method is characterized in that upon identification of a request from a mobile device transmitted within a thin client application, the display gateway triggers the management unit to initiate an upload process of content from the mobile device.

Providing of content according to the present invention is to be understood as delivering content to at least one other network entity of the communication network, in particular to a network server, which might be a server hosting websites for the Internet. Content to be delivered from the mobile device may include applications, such as games, and / or data files such as audio or video data files, e.g. ring tones or pictures. Also data files such as entries of a phonebook or contact list may be content according to the present invention.

The mobile device to be used in the present invention is preferably a device, which communicates with entities of a communication network, especially the Internet, via a communication protocol different from the network protocol of the network used to access the communication network. As such, mobile devices may include mobile phones or laptops being connected to the communication network via a network such as GSM or UMTS.

The remote gateway comprises or represents a remote display gateway, which serves for delivering display data to the mobile device. The remote display gateway is preferably part of the remote gateway, but may also be a separate entity which is connected to the remote gateway. On the remote gateway, in particular on the remote display gateway a server based application is installed, which preferably is a browser for browsing web sites on the Internet. The remote display gateway also serves for receiving and processing requests from the mobile device. These requests are being issued by the mobile device from within a thin client application on the mobile device.

The thin client application, which will hereinafter also be referred to as the thin client, is preferably a program installed on mobile device for remote access to a server based application installed on the remote gateway for display of the user interface of the server based application on the mobile device. The requests, which can be issued by the mobile device, hence, include selections of options displayed on the mobile device. The mobile device with the thin client application installed thereon serves as a mere input and output device for a server based application running on the remote gateway. The identification of the request within the thin client application at the remote display gateway is preferably, the identification of a function or option selected within a server based application via the thin client application. This function or option may be the selection of an upload option displayed within a browser application executed on the remote display gateway. The request for uploading of content is thus initiated via the thin client application and executed on the remote display gateway, i.e. within the server based browser application.

The triggering of the management unit from the display gateway may be the activation of a function within the management unit or the provisioning of input data to the management unit. By triggering the management unit the management unit will initiate an upload process. The initiation of the upload process may comprise the establishing of a communication connection to the mobile device or sending data or signals via an existing communication channel to the mobile device. If the existing communication channel or connection with the mobile phone, in particular an upload client on the mobile phone has dropped due to unforeseen circumstances, the upload client on the mobile phone may initiate a new connection session towards the remote gateway and in particular towards the management unit of the remote gateway managing upload of content.

By initiating an upload process based on a request transmitted within the thin client application, e.g. the selection of an upload option on a website displayed at the remote display gateway, it will be possible for a user of a mobile device, to upload content to a desired designation, e.g. a web server, from a mobile device even though the mobile device is executing a thin client application for access to websites.

The upload process preferably includes a transmission of instructions from the management unit to the mobile device, preferably to a management client unit on the mobile device.

The instructions may be transmitted to the mobile device via a communication channel established for thin client application, i.e. an existing communication channel between the remote gateway and the mobile device can be used. The management client unit on the mobile device, where the instructions from the management unit will preferably be received, may be a unit separate from the thin client on the mobile device. By sending instructions to a unit on the mobile device, actions on the mobile device may be initiated based on a selection made within a server based application, in particular a browser executed on the remote gateway. With the provision of a management unit, in particular an upload manager, it will be possible to communicate with the mobile phone, e.g. transmit instructions. Such a communication is not possible via the thin client application itself, as this application is designed to only receive display data from the remote display gateway and to transmit instruction, i.e. input data from the mobile phone to the remote display gateway for an application being executed on the remote display gateway.

Preferably, the instructions transmitted from the management unit to the mobile device relate to an application installed on the mobile device, preferably include a command for executing or launching an application installed on the mobile device.

The application installed on the mobile device to which the instructions from the remote gateway relate may be a local browser. By initiating the execution of such a local browser, the user will be provided with a tool for easily identifying the content to be uploaded to the remote site. As the application on the mobile device, in particular the local browser is automatically executed or launched based on the instructions received from the management unit of the remote gateway, the actions required from the user are minimized.

The management unit will receive information relating to content to be uploaded from the mobile device, in particular from the upload client. The information received at the management unit may be the storage location of the content on the mobile device. Preferably, the management unit, however, receives the selected content to be uploaded from the mobile device or a copy thereof. The content or the storage location information may be stored at the management unit in a temporary resource file.

The management unit preferably transmits data relating to the content to be uploaded to the remote display gateway to be used within the application, i.e. the server based application, executed at the remote gateway in connection with the thin client application. By providing data relating to the content to be uploaded from the management unit to the remote display gateway, the data can be used as input data for the server based application, in particular the browser application presently executed on the remote display gateway. Only by using a management unit capable of communication with the mobile device and receiving content there from, the user will be able to use upload options displayed on the remote display gateway which he access via a thin client application.

The data relating to the content to be uploaded which is provided to the remote display gateway may be an indication of the location of content. In particular, the storage location of the content within a temporary resource file at the management unit may be transmitted to the remote display gateway. By using this data as input data for the browser application executed on the remote display gateway, the upload path for the content is determined.

The display gateway may then upload the content to a remote server according to the request in the thin client application. This upload will be possible, as the management unit is in communication connection with the mobile device and has either received the content for upload or at least has received an indication of the storage location of the content for upload at the mobile device.

According to a further aspect, the present invention relates to a remote gateway for providing content from at least one mobile device of a communication network wherein the remote gateway comprises a remote display gateway for providing display data to a mobile device within a thin client application. The remote gateway is characterized in that it comprises a management unit for managing transmission of content from the at least one mobile device to the remote gateway, wherein the management unit is at least temporarily connected to the remote display gateway.

The connection to the management unit from the remote display gateway will be established, i.e. the management unit will be triggered, from the remote display gateway, upon identification of a request for uploading content within a browser application executed on the remote display gateway and accessed from a mobile device via a thin client application. In addition the connection between the remote display and the management unit will be used to transmit content or information relating to content from the management unit to the remote display gateway to be used as input data for the browser application executed on the remote display gateway. The connection of the management unit to the display gateway is, hence, preferably a connection for bidirectional transmission of signals, information, data and/or content.

The remote gateway preferably comprises a control unit for triggering the management unit to initiate an upload process for uploading content from the mobile device.

In addition to the connection to the remote display gateway, the management unit preferably comprises a communication interface for communication with a management client unit of the mobile device. Via this interface instructions to launch an application at the mobile device may be transmitted from the management unit. In addition, content or information on the storage location of the content on the mobile device may be received at the communication interface from the mobile device.

The remote gateway is preferably set up to be used for the method of providing content from a mobile device according to the present invention.

According to another aspect, the present invention relates to a mobile device of a mobile communication network comprising a client unit for displaying information from a remote gateway within a thin client application. The mobile device is characterized in that it further comprises an upload management client unit for communicating with a management unit of the remote gateway. By providing this extension to the mobile device, the user will be able to communicate with a remote server, in particular to upload content to the remote server via the remote gateway, even though the application accessing the remote server, i.e. the browser application, is executed on the remote gateway and is only accessed from the mobile device via the client unit for displaying information. Hence, the processing and memory requirements on the mobile device are lower than for mobile devices where the actual browser application for accessing websites is installed on the mobile device. Never the less the user experience when uploading content will be the same.

The management client unit is preferably connected to at least one application installed on the mobile device. The connection will allow the management client to access other applications, initiate the execution of other applications and receive data and content from other applications on the mobile device. The other application is preferably a local browser, which allows the user to conveniently access content stored on his mobile device.

The management client unit serves for receiving instructions from a management unit of the remote gateway and for transmitting information and/or content to the management unit of the remote gateway. As such, only limited amount of processing power and memory space is necessary for the management client unit.

The mobile device according to the present invention is preferably set up for use in the inventive method and in particular for communication with a remote gateway according to the present invention.

The units of the mobile device, the remote gateway and the management unit may be realized as software and/or hardware units. In addition, the units may at least partially be combined with each other.

Features and advantages which are described with respect the inventive method also relate to the inventive gateway and/or the inventive mobile device, where applicable, and vice versa.

The present invention will now be described again in detail with reference to the enclosed figures.
Figure 1 shows a system in which the inventive method can be used; and
Figure 2 shows a flowchart of one embodiment of the inventive method.

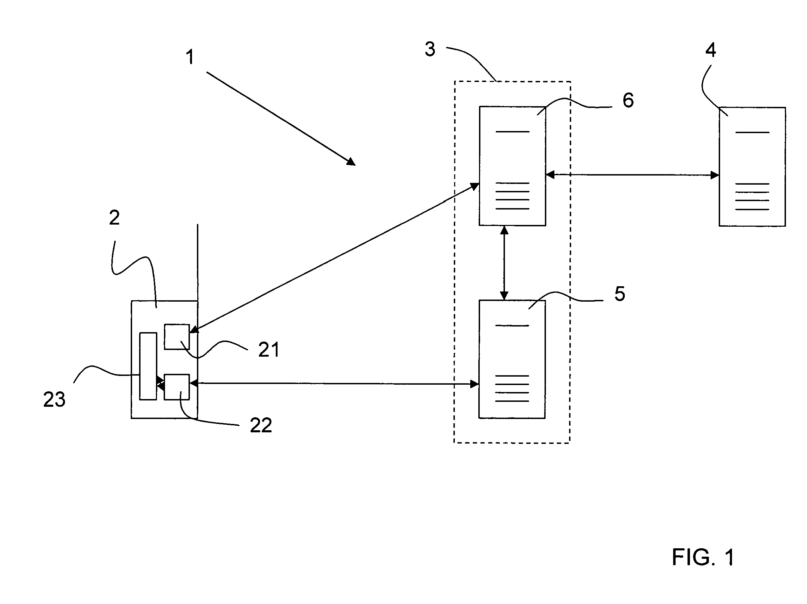

The system 1 shown in Figure 1 comprises a mobile device, depicted as a mobile phone 2. On the mobile phone 2 a remote display client 21 and an upload client 22 are provided. These clients 21, 22 may be software installed on the mobile phone 2. In addition a local browser 23 is provided on the mobile phone 2 for browsing content available on the mobile phone 2. The local browser application 23 can be accessed by the upload client 22.

The system 1 further comprises a remote gateway 3. The remote gateway 3 is connected to or can access a network server 4, which might host a website or a portal. In the depicted system 1, the remote gateway 3 comprises a remote display gateway 6 and an upload manager 5, which can also be referred to as a management unit. The upload manager 5 can communicate with the upload client 22 on the mobile phone 2.

The display client 21 on the mobile phone 2 is a thin client application, i.e. allows remote access and display of a server based application, such as a browser, installed and executed on the remote gateway 3. The user may use the thin client application to browse sites on the Internet. This browsing is performed by the remote display gateway 6. The content to be displayed to the user via the remote display client 21 is downloaded by the remote display gateway 6 from a network server 4. The thus available content will be made available for display on the mobile phone 2. The content itself, however, resides at the remote display gateway 6.

The thin client based browsing is thus performed by the remote display gateway 6, but can be manipulated via the mobile phone 2.

While browsing, the user may identify locations, e.g. websites, where content from his mobile phone 2 should be uploaded to. Such content may be applications, such as games or ring tones, or data files such as pictures.

For uploading content to the network server 4, the content has to be available at the remote gateway 3, where the application accessing the website, in particular the browser is being executed. In the system 1 as shown in Figure 1, where the mobile phone 2 is only used to manipulate, i.e. control the browser application on the remote gateway 3, content of the user of the mobile phone 2 will not be available at the remote gateway 3. Normal remote display clients 21 are not designed to support a delivery of content from the mobile phone 2 to the remote gateway 3, as their functionality is restricted to display data received from the remote display gateway 6 and transmit instructions to change the displayed data.

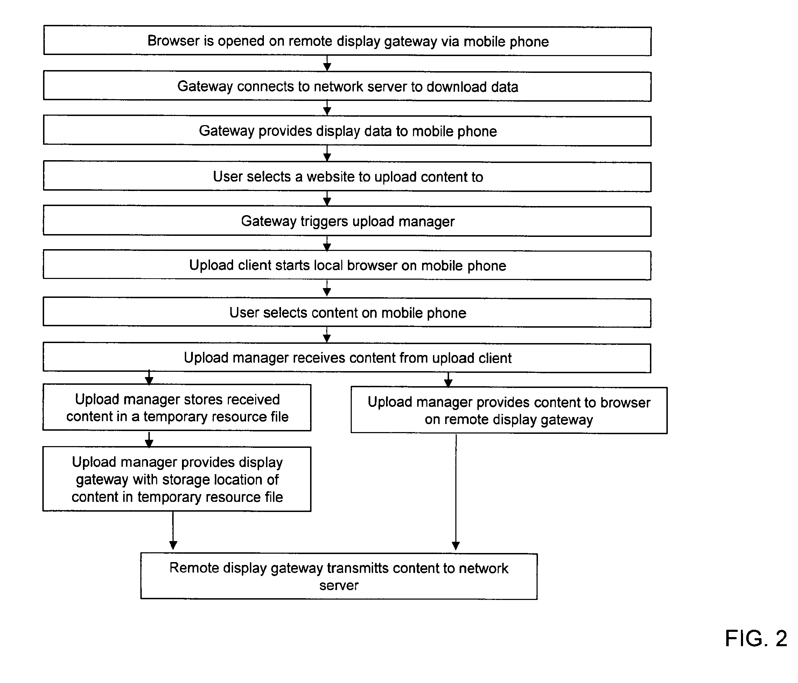

One example of the inventive method will now be described with reference to Figures 1 and 2.

A user initiates a thin client application and for example accesses a browser on a remote gateway 3. If the user selects a link, for example to a specific web site, the remote gateway 3 will connect to the network server 4, from which data should be retrieved and displayed to the user. The network server 4 may be a portal, allowing access to various data bases and other resources. The data from the network server 4 will be displayed to the user via the remote display gateway 6, which forwards the necessary display data to the remote display client 21 on the mobile phone 2.

If the user selects an option on a webpage to upload content to this webpage, i.e. to the server hosting the website, e.g. clicks on a link to upload personal data, such as pictures, contact information and/or audio files, a respective signal will be received at the remote display gateway 6. This specific request may be identified at the remote display gateway 6 by monitoring the actions behind the requests from the user issued within the thin client application.

Once the remote display gateway 6 receives and identifies a request for upload of content, the management unit, i.e. the upload manager 5, will be triggered. Instead of displaying the file browser of the remote gateway 3, the upload manager 5 provides the upload client 22 on the mobile phone 2 with the information that content is to be uploaded from the mobile phone 2. The upload client 22 may start an application on the mobile device 2, such as a local browser 23 on the mobile phone 2. The user can then select the content to be uploaded on his mobile phone 2 via the local browser 23. Once the user selected the content, the upload client 22 will transmit the content to the upload manager 5.

The upload manager 5 will receive the content and may store the content in a temporary resource file.

Subsequently, the upload manager 5 will provide the remote display gateway 6, where the browser application for browsing the Internet and accessing the network server 4 is executed, with the received content or with an indication of storage location in the temporary resource file at the upload manager 5. The content or the indication of storage location is used as input for the browser application. With this information available at the remote display gateway 6, the upload of the content to the network server 4 can be performed by the browser application executed on the remote display gateway 6.

According to the present invention the user may benefit from thin client based browsing of the Internet via his mobile phone. In particular, fast response times can be realized and the processing power required at the mobile phone is low. In addition, the user may, however, also upload content directly from his phone from within the thin client application. Hence, the present invention provides an enhanced user experience.

## Claims

1. Method for providing content from a mobile device (2) within a communication network comprising at least one remote gateway (3) with a display gateway (6) for a thin client application, at least one management unit (5) comprised by the remote gateway (3) and at least one mobile device (2), **characterized in that** upon identification of a request from a mobile device (2) transmitted within a thin client application, the display gateway (6) triggers the management unit (5) to initiate an upload process of content from the mobile device (2).

2. Method according to claim 1, **characterized in that** the upload process includes a transmission of instructions from the management unit (5) to the mobile device (2), preferably to a management client unit (22) on the mobile device (2).

3. Method according to claim 2, **characterized in that** the instructions relate to an application (23) installed on the mobile device (2), preferably include a command for executing an application (23), e.g. a browser, installed on the mobile device (2).

4. Method according to any one of claims 1 to 3, **characterized in that** the management unit (5) receives information relating to content to be uploaded, preferably the storage location of the content on the mobile device (2) and/or receives the content to be uploaded from the mobile device (2) and stores the received information and/or content.

5. Method according to any one of claims 1 to 4, **characterized in that** the management unit (5) transmits data relating to the content to the display gateway (6) to be used within the application executed at the remote gateway (3) in connection with the thin client application.

6. Method according to claim 5, **characterized in that** the data provided to the display gateway (6) is an indication of the location of content.

7. Method according to any one of claims 1 to 6, **characterized in that** the display gateway (6) uploads the content to a remote server (4) according to the request in the thin client application.

8. Remote gateway for providing content from at least one mobile device (2) of a communication network wherein the remote gateway (3) comprises a display gateway (6) for providing display data to a mobile device (2) within a thin client application, **characterized in that** the remote gateway (3) comprises a management unit (5) for managing transmission of content from the at least one mobile device (2) to the remote gateway (3), wherein the management unit is at least temporarily connected to the remote display gateway (6).

9. Remote gateway according to claim 8, **characterized in that** the remote gateway (3) comprises a control unit for triggering the management unit (5) to initiate an upload process for uploading content from the mobile device (2).

10. Remote gateway according to claim 8 or 9, **characterized in that** the connection of the management unit (5) to the display gateway (6) is a connection for bidirectional transmission of signals, information, data and/or content.

11. Remote gateway according to any one of claims 8 to 10, **characterized in that** the management unit (5) has a communication interface for communication with a management client unit (22) of the mobile device (2).

12. Remote gateway according to anyone of claims 8 to 11 for use in a method according to anyone of claims 1 to 7.

13. Mobile device of a mobile communication network comprising a client unit (21) for displaying information from a remote gateway (3) within a thin client application, **characterized in that** it further comprises an upload management client unit (22) for communicating with a management unit (5) of the remote gateway (3).

14. Mobile device according to claim 13, **characterized in that** the management client unit (22) is connected to at least one application (23) installed on the mobile device (2).

15. Mobile device according to claim 13 or 14, **characterized in that** the management client unit (22) serves for receiving instructions from a management unit (5) of the remote gateway (3) and for transmitting information and/or content to the management unit (5) of the remote gateway (3).

16. Mobile device according to claim 13 to 15 for use in a method according to anyone of claims 1 to 7.
